# FASCICULE DE BREVET EUROPEEN

(11) **EP 0 641 964 B1**
(45) Date de publication et mention de la délivrance du brevet: **02.01.1997**
(21) Numéro de dépôt: 94470027.7
(22) Date de dépôt: 31.08.1994
(51) Int. Cl.: F16L 3/26, H02G 3/04

(54) **Dispositif de support de câble ou conduits**
Kabel- oder Rohrstützvorrichtung
Cable or pipe supporting device

(30) Priorité: 03.09.1993 FR 9310538
(43) Date de publication de la demande: 08.03.1995
(73) Titulaire: EBO, F-54920 Villers La Montagne (FR)
(72) Inventeur: Arnould, Roger, F-57000 Metz (FR); Fischer, Heinz, F-57000 Metz (FR)
(74) Mandataire: Schmit, Christian Norbert Marie

(56) Documents cités:
- AU-B- 609 866
- FR-A- 2 067 937
- NL-A- 7 807 345
- US-A- 3 915 420
- US-A- 5 123 618

## Description

La présente invention concerne un dispositif de support de câbles ou conduits.

De tels dispositifs sont communément utilisés dans des installations industrielles de toutes tailles, pour guider et supporter des câbles électriques ou conduits de transport de fluides, généralement sur de grandes longueurs et permettent de regrouper dans un même support plusieurs câbles ou conduits disposés parallèlement.

Ces dispositifs sont généralement appelés échelles à câbles ou chemins de câbles, et ont une section de forme générale en "U" , à l'intérieur duquel les câbles sont posés et éventuellement fixés.

Ces échelles à câbles comportent deux longerons parallèles, constituant les ailes du "U", reliées par des échelons, qui forment le fond du "U", sur lesquels reposent les câbles. Les longerons assurent la rigidité de l'échelle qui, en position horizontale doit supporter le poids des câbles sans flexion excessive, l'échelle n'étant elle-même fixée à la structure de l'installation ou du bâtiment qu'en des points espacés de plusieurs mètres.

Les chemins de câbles sont eux généralement constitués par un profilé de section en forme de "U" dont le fond est une plaque continue éventuellement préformée ou perforée.

Un des problèmes posés par ces dispositifs est leur encombrement important lors de leur transport sur le lieu de montage, dû à leur section en forme de "U". Pour remédier à ce problème, il est connu de livrer les échelles à câbles démontées et de ne procéder à l'assemblage des longerons et échelons que sur le lieu d'installation.

Cet assemblage est effectué par vissage, soudage ou collage des échelons sur les longerons. Quel que soit ce mode d'assemblage, il nécessite un temps de main d'oeuvre important.

De plus, dans le cas d'un assemblage par vissage, il est nécessaire de percer au préalable les échelons et les longerons, et la mise en place des vis et écrous, et leur serrage, constituent des opérations longues et fastidieuses. De plus encore, les nombreuses vis d'assemblage qui sont nécessaires grèvent le coût de ces dispositifs, et il est fréquent que les vis soient rompues par un serrage trop énergique, notamment lors de l'utilisation de visserie en matière plastique ou composite.

On connaît également, par le document FR-A-2.067.937, un système d'assemblage par blocage des échelons sur les longerons au moyen de cales insérées entre un premier retour d'une aile du longeron et l'échelon, ce dernier étant engagé par une rainure transversale sur un deuxième retour d'aile, situé face au premier, sur la deuxième aile.

Une telle disposition présent cependant plusieurs inconvénients :
- manque de rigidité de l'assemblage du fait de la possibilité d'un écartement élastique des deux retours d'ailes ;
- l'effort de blocage s'exerce sur l'échelon juste au niveau de la rainure, donc en un point où la résistance mécanique est déjà affaiblie ;
- les cales sont de forme relativement complexes, donc coûteuses, et dépassent vers l'intérieur de l'échelle à câble.

La présente invention a pour but de résoudre les divers problèmes exposés ci-dessus, et de permettre à l'installateur d'effectuer un montage et une installation rapide sur site, sans emploi d'outillage spécial. L'invention a aussi pour but d'accroître la modularité de ces dispositifs, en permettant de nombreuses variantes dimensionnelles, tout en n'utilisant qu'un nombre limité d'éléments de base, eux-même réalisés de manière la plus simple et économique possible.

Avec ces objectifs en vue, l'invention a pour objet un dispositif de support de câbles ou conduits, comportant deux longerons parallèles, formés de profilés ayant une âme et une aile qui s'étend à partir du bord de l'âme, sensiblement perpendiculairement à celle-ci, des éléments de liaison de ces longerons entre eux, et des pièces de blocage pour bloquer les dits éléments de liaison sur les longerons, l'aile comportant sur sa face interne, du côté de l'âme, une nervure longitudinale, et les éléments de liaison comportant vers leurs extrémités des moyens d'emboîtement sur la dite nervure.

Selon l'invention, le dispositif est caractérisé en ce que chacune des dites pièces de blocage est insérée, en étant plaquée contre l'âme, entre l'extrémité des éléments de liaison et une saillie du longeron s'étendant sensiblement parallèlement à l'aile, pour presser cette extrémité contre ladite aile.

L'âme des longerons, qui se trouve dans un plan sensiblement vertical lorsque le dispositif est installé, assure la résistance à la flexion du dispositif.

L'aile des longerons supporte les extrémités des éléments de liaison sur lesquels reposent les câbles ou conduits. L'emboîtement des éléments de liaison sur la nervure assure d'une part, le positionnement de ces éléments par rapport aux longerons, et d'autre part, garantit un espacement fixe et déterminé des deux longerons, en empêchant toute possibilité d'écartement de ceux-ci. La pièce de blocage assure la rigidité de cet emboîtement, par simple coincement de cette pièce entre l'extrémité de l'élément de liaison et la saillie du longeron.

Le dispositif selon l'invention, présente l'avantage de pouvoir être assemblé très aisément sans boulonnerie ni outillage particulier. En effet, il suffit d'emboîter les éléments de liaison sur les rainures des longerons et d'insérer les pièces de blocage, par exemple au marteau, pour assurer une liaison rigide et durable des différents composants du dispositif.

Selon une première variante de réalisation, pour constituer des échelles à câbles, les éléments de liaison sont constitués par des échelons disposés perpendiculairement aux longerons, et espacés entre eux.

Selon une autre variante, les éléments de liaison sont constitués d'une ou plusieurs plaques, le dispositif une fois assemblé se présentant sous la forme d'un chemin de câbles.

Selon une disposition particulière de l'invention, la saillie du longeron qui sert de butée aux pièces de blocage, est constituée par une deuxième aile du longeron lequel a de ce fait une section transversale en forme de "U", ou de "H" si les ailes s'étendent de part et d'autre de l'âme, dans le cas d'un longeron utilisé par exemple pour former un système d'échelles à câbles juxtaposées.

Préférentiellement dans ce cas, les deux ailes comportent des nervures identiques, et sont symétriques par rapport à un plan médian longitudinal du longeron, et les éléments de liaisons peuvent alors être placés indifféremment sur l'une ou l'autre aile, ce qui facilite encore l'assemblage du dispositif et accroît ses possibilités d'utilisation. De plus, la nervure de l'aile opposée à celle sur laquelle sont emboîtés les éléments de liaison, assure également un meilleur maintien des pièces de blocage.

Selon d'autres dispositions particulières de l'invention :
- les moyens d'emboîtement des éléments de liaison sont constitués par une rainure de forme complémentaire à celle de la nervure des longerons ;
- la distance entre la nervure et l'âme du longeron est sensiblement égale à la distance entre la rainure et les extrémités des éléments de liaison ;
- les pièces de blocage ont une épaisseur sensiblement égale à la distance entre la nervure et l'âme des longerons ;
- les échelons sont constitués de profilés pleins ou tubulaires ;
- les échelons sont constitués de profilés de section en forme de "C" comportant un fond sensiblement plat, deux ailes et deux retours d'ailes sensiblement parallèles au fond et ménageant entre eux une saignée longitudinale ;
- la rainure est réalisée dans la paroi formant le fond du "C", et les pièces de blocage sont en appui sur les retours d'ailes ;
- les pièces de blocage comportent un bossage engagé sans jeu dans la saignée.

D'autres caractéristiques et avantages apparaîtront dans la description qui va être faite à titre d'exemple de deux variantes de réalisation du dispositif selon l'invention, l'une pour la réalisation d'une échelle à câble, et la seconde pour la réalisation d'un chemin de câbles.

On se reportera aux dessins annexés dans lesquels :
- la figure 1 est une vue générale en perspective d'une échelle à câble,
- la figure 2 est une vue de détail de l'assemblage d'un échelon sur un longeron,
- la figure 3 est une vue partielle des différents éléments, séparés, constituant le dispositif,
- la figure 4 est une vue en bout du dispositif, montrant le principe d'assemblage et de blocage des échelons sur les longerons,
- la figure 5 est une vue similaire à celle de la figure 2, dans le cas de réalisation d'un chemin de câbles.

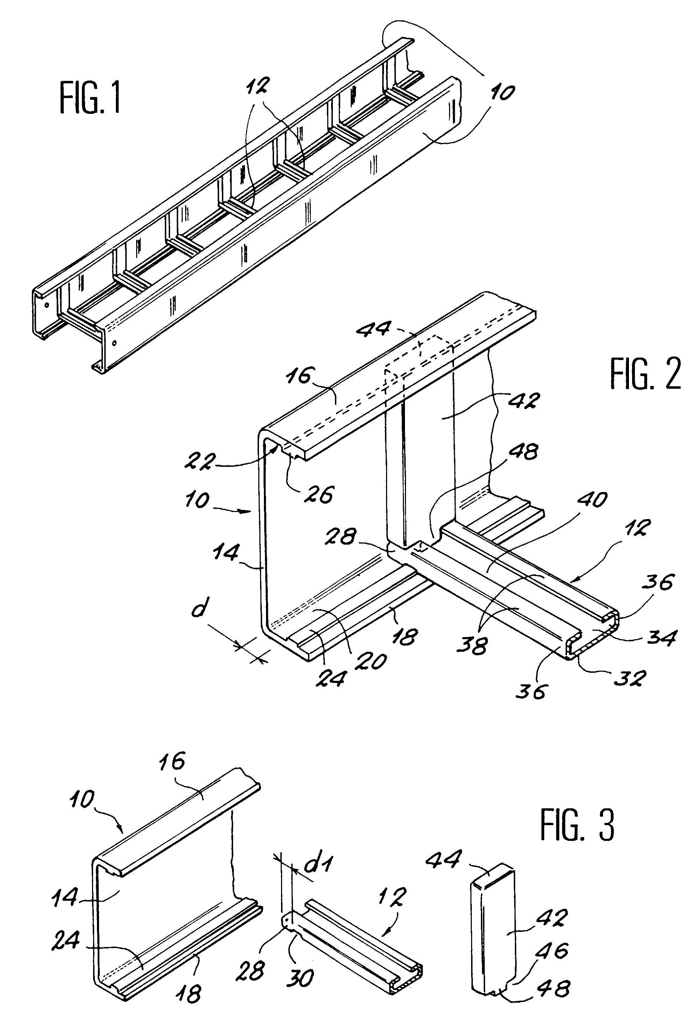

Sur le dessin de la figure 1, on a représenté un dispositif de support de câbles, conforme à l'invention, qui comporte deux longerons 10, parallèles, et des éléments de liaison de ces longerons, constitués par des échelons 12. Ce dispositif constitue une échelle à câbles qui peut supporter plusieurs câbles disposés parallèlement. Les câbles reposent sur les échelons et peuvent y être fixés.

Les longerons et les échelons peuvent être réalisés en métal, par exemple en acier ou aluminium, ou préférentiellement en matériau composite, tel que du polyester armé de fibre de verre, ou autres matières plastiques.

Les dimensions des longerons et échelons sont déterminés en fonction de la charge à supporter, et du nombre de câbles destinés à être placés sur l'échelle à câbles.

En liaison avec les figures 2 et 3 on va maintenant décrire de manière détaillée le système d'assemblage des échelons sur les longerons conforme à l'invention.

Les longerons 10 sont constitués de profilés ayant une section de forme générale en "U", comportant une âme 14 et deux ailes 16, 18, s'étendant sensiblement perpendiculairement à l'âme.

Chaque aile comporte, sur la face interne 20, 22, dirigée vers l'intérieur du "U", une nervure 24, 26 longitudinale, par exemple de section rectangulaire, située à une distance d de l'âme 14.

Ces éléments de liaison sont constitués, dans la première variante, d'échelons 12, espacés selon la direction longitudinale des longerons. Les échelons 12 comportent vers leurs extrémités 28 des moyens d'emboîtement sur la nervure 24, constitués de rainures 30 réalisées sur la face inférieure 32 des échelons, perpendiculairement à ceux-ci. La forme de cette rainure 30 est complémentaire à celle de la nervure 24, de manière à s'emboîter précisément sur celle-ci.

Les échelons 12 sont constitués par un profilé de section en forme de "C" comportant un fond 34, sensiblement plat, deux ailes 36 et deux retours 38 d'ailes sensiblement parallèles au fond 34, et ménageant entre eux une saignée 40. La forme en "C" est particulièrement avantageuse car elle permet d'adapter facilement sur les échelons des moyens de fixation des câbles, tels que des dispositifs connus de fixation dits "à quart de tour" que l'on insère dans la saignée et que l'on bloque, par rotation d'un quart de tour, sous les retours d'aile. Par ailleurs, les retours d'aile permettent de présenter une surface d'appui importante pour des pièces de blocage 42, ce qui va être expliqué par la suite.

Les échelons, emboîtés sur la rainure 24, sont maintenus en place par les dites pièces de blocage 42, de forme générale parallélépipèdique, insérées en force entre l'extrémité 28 de l'échelon et une saillie du longeron constituée ici par l'aile 16. La pièce de blocage 42 est préférentiellement réalisée par découpe d'un profilé plat, plein ou tubulaire, et son épaisseur est préférentiellement égale à la distance d entre la nervure 24 et l'âme 14 du longeron. De cette manière, lorsque la pièce de blocage 42 est mise en place et plaquée contre l'âme 14 du longeron, son extrémité supérieure 44 s'insère entre la nervure 26 de l'aile supérieure et l'âme 14, ce qui évite tout risque de déboîtement ultérieur de la pièce de blocage.

L'extrémité inférieure 46 de la pièce de blocage est en appui sur les retours d'aile 38 de l'échelon, la hauteur de la pièce de blocage étant déterminée, en fonction des dimensions des longerons et des échelons, de manière que la pièce de blocage presse l'extrémité de l'échelon contre l'aile 18, cet effort de pression résultant notamment de l'élasticité des profilés constituant les longerons et les échelons.

Avantageusement, l'extrémité inférieure 46 de la pièce de blocage est pourvue d'un bossage 48 dont la largeur est égale à celle de la saignée 40. Ce bossage pénètre sans jeu dans la saignée entre les retours d'ailes 38 et assure ainsi le bon écartement de ceux-ci, en évitant leur rapprochement sous l'effort exercé par la pièce de blocage.

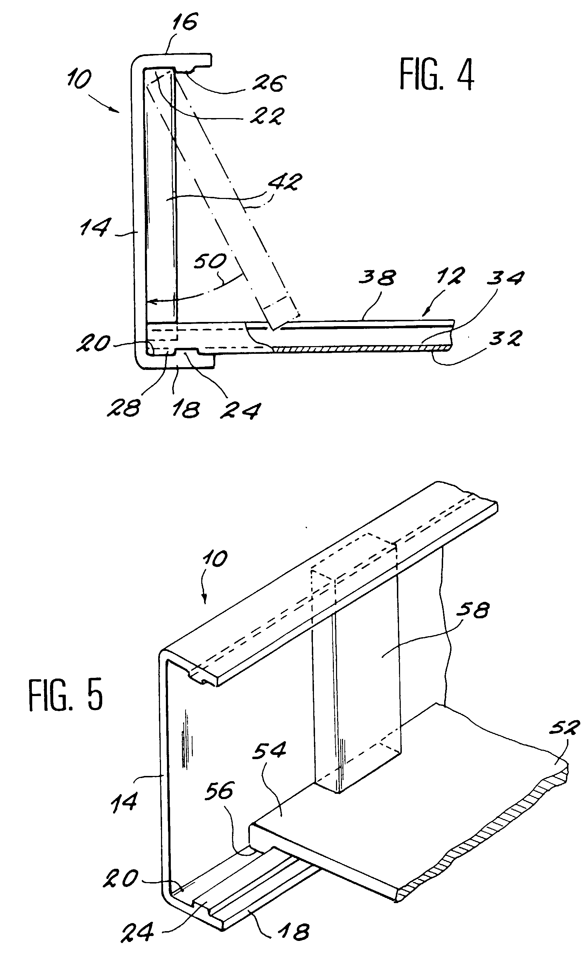

La mise en place des pièces de blocage est représentée à la figure 4. Après avoir positionné l'extrémité 28 de l'échelon sur la nervure 24 de l'aile 18, on engage l'extrémité supérieure 44 de la pièce de blocage derrière la nervure 26 de l'aile supérieure 16, et par un pivotement selon la flèche 50, on rapproche la pièce de blocage 42 de l'âme 14 du longeron, en engageant le bossage 48 dans la saignée 40.

La mise en position finale de la pièce de blocage 42 est assurée simplement au marteau en frappant sur la dite pièce pour la plaquer contre l'âme du longeron.

Comme on le comprendra aisément, ce système d'assemblage permet de positionner sans aucune difficulté les échelons en toutes positions selon la direction longitudinale des longerons.

Préférentiellement la distance dl entre la rainure 30 et l'extrémité de l'échelon est égale à la distance d entre la nervure 24 et l'âme du longeron. De cette manière, la surface de contact entre la pièce de blocage 42 et l'échelon est maximale, ce qui assure une meilleure tenue mécanique de l'assemblage.

On notera que si la distance d1 est inférieure à la distance d, il est nécessaire que le profil de la rainure 30 soit précisément correspondant à celui de la nervure 24, pour assurer le positionnement angulaire de l'échelon par rapport au longeron.

Dans le cas où la distance d1 est égale à d, ce positionnement est assuré par l'emboîtement de l'extrémité de l'échelon entre la nervure 24 et l'âme 14. La rainure 30 peut alors avoir une largeur supérieure à celle de la nervure 24.

L'échelon peut aussi être constitué d'un profilé de section constante sur toute sa longueur jusqu'à la distance d des extrémités, et comporter uniquement sur cette distance une surépaisseur déterminée pour s'emboîter entre la nervure 24 et l'âme 14 du longeron.

Dans le cas de l'utilisation d'un profilé en "C", la profondeur de la rainure 30 est préférentiellement inférieure à l'épaisseur du fond 34 de manière à conserver une continuité de matière de ce fond au niveau de la rainure.

Dans la seconde variante, représentée à la figure 5, le dispositif constitue un chemin de câbles.

Sa structure générale est similaire à celle de l'échelle à câble décrite précédemment, de même que son mode d'assemblage. Les échelons 12 sont remplacés par des plaques 52 sensiblement planes et continues qui forment le fond du chemin de câbles. Ces plaques comportent sur leurs bords 54, une surépaisseur constituant une languette 56 qui s'emboîte entre la nervure 24 et l'âme 14, en s'appuyant contre l'aile 18 du longeron 10. Les pièces de blocage 58, réparties sur la longueur des longerons, assurent le maintien de l'assemblage.

L'invention n'est pas limitée aux dispositifs décrits ci-dessus à titre d'exemple. En particulier :
- les échelons peuvent être formés de profilés de section pleine ou creuse, tels que des plats ou des tubes de section rectangulaire ;
- les nervures et/ou rainures peuvent avoir une section de différentes formes, par exemple triangulaire ou arrondie ;
- l'âme des longerons, ainsi que les plaques de fond dans la deuxième variante, peuvent être nervurées ou percées.

L'invention s'applique à la réalisation d'échelles ou chemins de câbles, et permet avec un jeu réduit d'éléments de base (longerons, éléments de liaisons, pièces de blocage) de réaliser une grande variété de dispositifs de support, de formes et dimensions adaptées à chaque utilisation, et d'assemblage aisé par les monteurs ou même l'utilisateur, à qui le dispositif peut être livré en kit prêt à assembler.

## Revendications

1. Dispositif de support de câbles ou conduits, comportant deux longerons (10) parallèles, formés de profilés ayant une âme (14) et une aile (18) qui s'étend à partir du bord de l'âme, sensiblement perpendiculairement à celle-ci, des éléments de liaison (12, 52) de ces longerons entre eux, et des pièces de blocage pour bloquer les dits éléments de liaison sur les longerons, l'aile comportant sur sa face interne (20), du côté de l'âme, une nervure (24) longitudinale, et les éléments de liaison (12, 52) comportant vers leurs extrémités des moyens (30, 56) d'emboîtement sur la dite nervure, caractérisé en ce que chacune des dites pièces de blocage (42, 58) est insérée, en étant plaquée contre l'âme (14), entre l'extrémité (28, 54) des éléments de liaison et une saillie (16) du longeron s'étendant sensiblement parallèlement à l'aile, pour presser cette extrémité contre ladite aile.

2. Dispositif selon la revendication 1, caractérisé en ce que les éléments de liaison sont constitués par des échelons (12) disposés perpendiculairement aux longerons (10), et espacés entre eux.

3. Dispositif selon la revendication 1, caractérisé en ce que les éléments de liaison sont constitués d'une ou plusieurs plaques (52).

4. Dispositif selon la revendication 1, caractérisé en ce que la saillie du longeron est constituée par une deuxième aile (16) de celui-ci.

5. Dispositif selon la revendication 4, caractérisé en ce que les deux ailes (16, 18) sont symétriques par rapport à un plan médian longitudinal du longeron.

6. Dispositif selon l'une des revendications 1 à 5, caractérisé en ce que les moyens d'emboîtement des éléments de liaison sont constitués par une rainure (30) de forme complémentaire à celle de la nervure (24) des longerons.

7. Dispositif selon la revendication 6, caractérisé en ce que la distance (d) entre la nervure (24) et l'âme (14) du longeron est sensiblement égale à la distance (d1) entre la rainure (30) et les extrémités des éléments de liaison (12).

8. Dispositif selon l'une des revendications 6 et 7, caractérisé en ce que les pièces de blocage (42) ont une épaisseur sensiblement égale à la distance (d) entre la nervure (24) et l'âme (14) des longerons.

9. Dispositif selon la revendication 2, caractérisé en ce que les échelons (12) sont constitués de profilés pleins ou tubulaires.

10. Dispositif selon la revendication 2, caractérisé en ce que les échelons sont constitués de profilés de section en forme de "C" comportant un fond (32) sensiblement plat, deux ailes (36) et deux retours d'ailes (38) sensiblement parallèles au fond et ménageant entre eux une saignée (40) longitudinale.

11. Dispositif selon la revendication 10, caractérisé en ce que la rainure (30) est réalisée dans la paroi (32) formant le fond du "C", et les pièces de blocage (42) sont en appui sur les retours d'ailes (38).

12. Dispositif selon la revendication 11, caractérisé en ce que les pièces de blocage (42) comportent un bossage (48) engagé sans jeu dans la saignée (40).

## Patentansprüche

1. Stützvorrichtung für Kabel oder Leitungen, die zwei parallele Längsträger (10) umfaßt, die von Profilen gebildet werden, die einen Mittelteil (14) und einen Seitenteil (18), der vom Rand des Mittelteils ausgeht und im wesentlichen quer zu diesem verläuft, Verbindungselemente (12, 52) dieser Längsträger untereinander sowie Blockierungselemente zum Blockieren dieser Verbindungselemente an den Längsträgern umfassen, wobei der Seitenteil an seiner Innenseite (20) auf der Seite des Mittelteils eine längs verlaufende Rippe (24) aufweist und die Verbindungselemente (12, 52) zu ihren Enden hin Vorrichtungen (30, 56) zum Aufstecken auf diese Rippe aufweisen, dadurch gekennzeichnet, daß jedes der Blockierungselemente (42, 58) - gedrückt gegen den Mittelteil (14) - zwischen dem Ende (28, 54) der Verbindungselemente und einem Überhang (16) des Längsträgers eingesetzt ist, der sich im wesentlichen parallel zum Seitenteil erstreckt, um dieses Ende gegen diesen Teil zu drücken.

2. Vorrichtung nach Anspruch 1, dadurch gekennzeichnet, daß die Verbindungselemente aus Sprossen (12) bestehen, die quer zu den Längsträgern angeordnet sind und voneinander beabstandet sind.

3. Vorrichtung nach Anspruch 1, dadurch gekennzeichnet, daß die Verbindungselemente aus einer oder mehreren Platten (52) bestehen.

4. Vorrichtung nach Anspruch 1, dadurch gekennzeichnet, daß der Überhang des Längsträgers aus einem zweiten Seitenteil (16) desselben besteht.

5. Vorrichtung nach Anspruch 4, dadurch gekennzeichnet, daß die beiden Seitenteile (16, 18) bezüglich einer längs verlaufenden Mittelebene des Längsträgers symmetrisch sind.

6. Vorrichtung nach einem der Ansprüche 1 bis 5, dadurch gekennzeichnet, daß die Aufsteckvorrichtungen der Verbindungselemente aus einer Rille (30) bestehen, die eine der Rippe (24) der Längsträger entsprechende Form aufweist.

7. Vorrichtung nach Anspruch 6, dadurch gekennzeichnet, daß der Abstand (d) zwischen der Rippe (24) und dem Mittelteil (14) des Längsträgers im wesentlichen gleich dem Abstand (dl) zwischen der Rille (30) und den Enden der Verbindungselemente (12) sind.

8. Vorrichtung nach einem der Ansprüche 6 und 7, dadurch gekennzeichnet, daß die Blockierelemente (42) eine Stärke aufweisen, die im wesentlichen gleich dem Abstand (d) zwischen der Rippe (24) und dem Mittelteil (14) der Längsträger ist.

9. Vorrichtung nach Anspruch 2, dadurch gekennzeichnet, daß die Sprossen (12) aus Voll- oder Röhrenprofilen bestehen.

10. Vorrichtung nach Anspruch 2, dadurch gekennzeichnet, daß die Sprossen aus Profilen bestehen, die einen Querschnitt in C-Form haben und einen im wesentlichen ebenen Boden (32), zwei Seitenteile (36) und zwei zum Boden im wesentlichen parallele Seitenteilumbiegungen (38) aufweisen und zwischen sich eine längliche Rinne (40) bilden.

11. Vorrichtung nach Anspruch 10, dadurch gekennzeichnet, daß die Rille (30) in der den Boden des C bildenden Wand (32) vorgesehen ist und die Blockierelemente (42) auf den Seitenteilumbiegungen (38) aufliegen.

12. Vorrichtung nach Anspruch 11, dadurch gekennzeichnet, daß die die Blockierelemente (42) einen Höcker (48) aufweisen, der spielfrei in die Rinne (40) eingeführt ist.

## Claims

1. Device for supporting cables or conduits, having two parallel longitudinal members (10), formed by profiled elements having a web (14) and a flange (18) which extends from the edge of the web, substantially perpendicularly thereto, elements (12, 52) for connecting these longitudinal members together, and locking pieces for locking the said connecting elements on the longitudinal members, the flange having on its internal face (20), on the same side as the web, a longitudinal rib (24), and the connecting elements (12, 52) having, towards their ends, means (30, 56) of nesting on the said rib, characterised in that each of the said locking pieces (42, 58) is inserted, whilst being applied against the web (14), between the end (28, 54) of the connecting elements and a projection (16) on the longitudinal member extending substantially parallel to the web, in order to press this end against the said flange.

2. Device according to Claim 1, characterised in that the connecting elements are formed by steps (12) disposed perpendicularly to the longitudinal members (10), and spaced apart from each other.

3. Device according to Claim 1, characterised in that the connecting elements consist of one or more plates (52).

4. Device according to Claim 1, characterised in that the projection on the longitudinal member consists of a second flange (16) thereon.

5. Device according to Claim 4, characterised in that the two flanges (16, 18) are symmetrical with respect to a longitudinal mid-plane of the longitudinal member.

6. Device according to one of Claims 1 to 5, characterised in that the means of nesting on the connecting elements consist of a groove (30) with a shape complementary to that of the rib (24) on the longitudinal members.

7. Device according to Claim 6, characterised in that the distance (d) between the rib (24) and the flange (14) on the longitudinal member is substantially equal to the distance (d1) between the groove (30) and the ends of the connecting elements (12).

8. Device according to one of Claims 6 and 7, characterised in that the locking pieces (42) have a thickness substantially equal to the distance (d) between the rib (24) and the flange (14) on the longitudinal members.

9. Device according to Claim 2, characterised in that the steps (12) consist of solid or tubular profiled elements.

10. Device according to Claim 2, characterised in that the steps consist of profiled elements with a cross section in the form of a "C" having a substantially flat base (32), two flanges (36) and two flange returns (38) substantially parallel to the base and forming between them a longitudinal channel (40).

11. Device according to Claim 10, characterised in that the groove (30) is produced in the wall (32) forming the base of the "C", and the locking pieces (42) are in abutment against the flange returns (38).

12. Device according to Claim 11, characterised in that the locking pieces (42) have a protrusion (48) engaged without clearance in the channel (40).
